# EUROPEAN PATENT APPLICATION

(11) **EP 3 446 842 A1**
(43) Date of publication of application: **27.02.2019**
(21) Application number: 17187821.8
(22) Date of filing: 24.08.2017
(51) Int. Cl.: B26D 5/00, B26D 7/26, B26D 1/29, B29B 9/06

(54) **METHOD FOR ALIGNING A CUTTER PLATE OF A PELLETIZER USING A REMOTE ALIGNMENT ADJUSTMENT DEVICE**

(71) Applicant: Basell Polyolefine GmbH, 50389 Wesseling (DE)
(72) Inventor: WIRADJAJA, Arfie, 51467 Bergisch Gladbach (DE); SACHS-WEINGAERTNER, Guenter, 85098 Grossmehring (DE)
(74) Representative: Seelert, Stefan

(57) **Abstract**

Method for aligning a cutter plate in a pelletizer for polymer pellets using a remote alignment adjustment device having a distance measurement probe. Said remote alignment adjustment device is attached to the drive shaft of the cutter plate and rotates with the shaft to correct the alignment in different sections of the die plate. In some embodiments, the remote alignment adjustment device comprises a camera for taking photos and/or videos and the distance measurement probe comprises a dial indicator gauge. Further disclosed is a process for preparing polyethylene pellets in a pelletizer using said method for aligning a cutter plate.

## Description

### FIELD OF THE INVENTION

The present disclosure provides a method for aligning a cutter plate using a remote alignment adjustment device and a process for preparing polyethylene pellets in a pelletizer using said remote alignment adjustment device.

### BACKGROUND OF THE INVENTION

Pellets are made by extruding a polymer material and by cutting said polymer material. For a high efficiency of cutting pellets, a die plate is used having apertures for the heated and liquefied polymer material. A plurality of rotating blades cut the polymer strands emerging from said apertures. If an underwater cutter is used, water transports the resulting pellets away and cools said pellets. The quality of pellets depends on a correct alignment of the cutter plate comprising said blades. When the polymer strands emerge from apertures of the die plate, the strands are not fully cooled down, yet. In particular the inside of said strands, which still may be hot or warm, can be easily deformed. Thus, the alignment of the cutter plate has to correspond to the alignment of the apertures to result in a well-defined cutting profile of the pellets.

US 2,252,900 discloses an early example of a pellet forming apparatus with an extrusion mill apparatus comprising a die having at least one row of aligned openings therein for the extrusion of rods of pellet material.

US 3,973,890 discloses an adjustable die face pelletizer having a thermoplastic extruder with a plurality of radially projecting blades to sever extruded heat-plastified materials emerging from a die plate. An objective is to provide a face-cutting apparatus that can effect the high speed production of uniform pellets.

US 6,099,288 discloses a pellet-forming apparatus for extruding high moisture materials in a low-pressure extrusion apparatus having an extruding cylinder and a cooperative extruding rotor.

WO 91/17034 A1 discloses a die rod with at least one plurality of vertically arranged extrusion orifices which, when the die rod is disposed in the die means passage, are adapted to be aligned longitudinally with the channel. The extrudate material is thereby received by the inlet chamber, extruded through the aligned extrusion orifices, and presented to the cutter means, which shears off the material to form pellets.

US 2010/0323047 A1 discloses a cutter hub for an underfluid pelletizer in which pelletizable material such as molten polymer is extruded as strands through orifices in a die plate. The cutter hub has a plurality of cutter blades integral therewith and is made of a single solid one-piece construction of hub and blades. The cutter hub is rotatably driven and moves along the face of the die plate so that the blades cut the extruded strands into pellets.

US 5,641,522 discloses a pelletizer for an extruder, wherein a rotor rotates about the axle and carries a plurality of axially extending cutters for pelletizing the strand. A sleeve is fixed to and over the shaft and has a recess forming a fluid manifold in communication with the conduit and the rotor. The recess has a given angular extent about the sleeve. A plurality of annularly spaced linear arrays of passages in the rotor communicate with the recess manifold in accordance with their angular position about the shaft. The passages of each array are aligned with the edge of a different cutter for sequentially generating arrays of streams of pressurized air impinging upon the cutters after pelletizing as the rotor rotates.

DE 10 2012 104 066 A1 discloses a device for manufacturing and cutting fiber-containing dry pellets that has a die plate, where the fiber-containing materials are pressed through the bores of the die plate by pressing units. A deflecting perforated sheet is arranged downstream the die plate. The holes of the perforated sheet are arranged congruently to the die plate bores.

To improve the quality of pellets, the alignment of the cutter plate should be corrected when the setup is changed, e.g. after a disassembling of the pelletizer. If such a correction is omitted or done inaccurately, this may cause a low quality of pellets. For polymers, this may be not acceptable, resulting in low quality polymer pellets having a tail of squeezed material.

Hence, it is sometimes needed to stop the machine for such a correction. This is a time-consuming step that lowers the amount of produced pellets. Additionally, the die plate has to be accessed in a narrow space. It may still be hot, and the blades of the cutter plate represent an additional source of danger. Thus, it is very difficult to correct the alignment and there is a risk of accidents with methods of alignment of the art. In particular, protection gloves which are sufficiently heat resistant and sufficiently resistant to blades are not available; metal gloves are not heat resistant and polymer gloves are not sufficiently resistant to blades.

There is accordingly a need to provide an improved method for aligning a cutter plate. In particular, the method according to the present disclosure is fast, very safe and results in a higher precision of alignment than previous methods. The present disclosure further provides a process for preparing high quality pellets using said method for aligning a cutter plate.

### SUMMARY OF THE INVENTION

The present disclosure provides a method for aligning a cutter plate in a pelletizer for polymer pellets using a remote alignment adjustment device, the pelletizer comprising a die plate having a plurality of apertures for extrudate strands, a cutter plate with a plurality of blades and a drive shaft that is fixedly connected to the cutter plate, said die plate comprising a first side that is facing the cutter plate and an opposing second side facing away from the cutter plate, the remote alignment adjustment device having a distance measurement probe and a mounting device that is attachable to the drive shaft, wherein the remote alignment adjustment device is connectable to a data processing device, the method comprising the following steps:
i) attaching the remote alignment adjustment device to the drive shaft using the mounting device in such a way that the distance measurement probe contacts a first section of the die plate obtaining measuring data of said first section,
ii) transmitting said measuring data of the first section of the die plate from the remote alignment adjustment device to the data processing device,
iii) rotating the drive shaft to a second section of the die plate in such a way that the distance measurement probe contacts a second section of the die plate obtaining measuring data of said second section,
iv) transmitting said measuring data of the second section of the die plate from the remote alignment adjustment device to the data processing device,
v) adjusting the alignment of the cutter plate and/or the die plate based on measuring data of the first and second section supplied by the data processing device,
vi) removing the remote alignment adjustment device from the pelletizer.

In some embodiments, the remote alignment adjustment device comprises a camera for taking photos and/or videos and the distance measurement probe comprises a dial indicator gauge, wherein the camera takes photos and/or a video of the dial indicator gauge, wherein said photos and/or video is said measuring data of the distance measurement probe.

In some embodiments, the dial indicator gauge is closer to the cutter plate than the camera in steps i) to v).

In some embodiments, the method further comprises the steps of
a1) rotating the drive shaft to a third section of the die plate in such a way that the distance measurement probe contacts a third section of the die plate obtaining measuring data of said third section,
a2) transmitting said measuring data of the third section of the die plate from the remote alignment adjustment device to the data processing device,
b1) rotating the drive shaft to a fourth section of the die plate in such a way that the distance measurement probe contacts a fourth section of the die plate obtaining measuring data of said fourth section,
b2) transmitting said measuring data of the fourth section of the die plate from the remote alignment adjustment device to the data processing device.

In some embodiments, the die plate maintains at least in a section a temperature that differs no more than 50°C from its operating temperature, wherein the operating temperature is the temperature said section has when pelletizing for at least two hours.

In some embodiments, the die plate has at least in a section a temperature of 180 to 280°C that is maintained using a heating fluid.

In some embodiments, the mounting device comprises a flexible and deformable connecting structure that remains rigid when no stronger force than the force of gravitation is applied.

In some embodiments, the mounting device comprises a clamp and/or screws for anchoring to the drive shaft.

In some embodiments, the remote alignment adjustment device comprises a light source. In a preferred embodiment, the remote alignment adjustment device comprises a camera that is an endoscope.

In some embodiments, the polymer pellets are made from polyethylene, in particular high-density polyethylene (HDPE). It was found that the above described method is particularly suitable for said pellets.

In some embodiments, the remote alignment adjustment device is connected wirelessly to the data processing device.

In some embodiments, the data processing device is configured to analyze the measuring data of the distance measurement probe and to provide adjustment values based on said measuring data for manual adjustment means for adjusting the cutter plate and/or the die plate.

In some embodiments, the manual adjustment means are regulating screws and are arranged externally of the chamber for changing the adjustment of the cutter plate and/or the die plate.

In some embodiments, the pelletizer has a chamber facing the second side of the cutter plate, wherein the chamber has a reclosable opening for insertion of the remote alignment adjustment device, wherein the chamber is configured and designed to be filled with water.

The present discloses also provides a process for preparing polyethylene pellets in a pelletizer, the pelletizer comprising a die plate having a plurality of apertures for extrudate strands, a cutter plate with a plurality of blades and a drive shaft that is fixedly connected to the cutter plate, said die plate comprising a first side that is facing the cutter plate and an opposing second side facing away from the cutter plate, the remote alignment adjustment device comprising a distance measurement probe and a mounting device that is connectable to the pelletizer, wherein the remote alignment adjustment device is connectable to a data processing device, the process of pelletizing comprising the steps of
a) melting of polyethylene in an extruder,
b) pushing of the melted polyethylene through a die plate,
c) cutting the resulting strands with the cutter plate into pellets,
e) stopping the machine for maintenance,
f) removing water from the chamber,
g) aligning of the cutter plate as described above,
h) refilling the chamber with water,
i) continuing with pelletizing in accordance with steps a) to c).

### BRIEF DESCRIPTION OF THE DRAWINGS

In the figures:
- Figure 1:: shows a schematic view of an embodiment of a pelletizer with the remote alignment adjustment device in accordance with the present disclosure;
- Figure 2:: shows a schematic view of a frontal view of the embodiment if Fig. 1, wherein a front section and the die plate have been removed to allow a view into the chamber;
- Figure 3:: shows a schematic view of a camera of an embodiment of the remote alignment adjustment device;
- Figure 4:: shows an embodiment of a pelletizer the remote alignment adjustment device, wherein the remote alignment adjustment device is connected to a laptop,
- Figure 5:: shows an embodiment of the remote alignment adjustment device having a camera and a distance measurement probe.

### DETAILED DESCRIPTION OF THE INVENTION

For adjustment of cutter plates, it is common to conduct a manual adjustment, wherein a skilled person directly watches the cutter plate and adjusts said cutter plate using regulating screws. However, this kind of work is highly dangerous due to the narrow working space, the sharp blades, the temperatures within the working space and the lighting situation. With the present disclosure, it was found that the time spent in said space can be reduced drastically whilst ensuring a faster and more precise adjustment.

The present disclosure provides a method for aligning a cutter plate in a pelletizer for polymer pellets using a remote alignment adjustment device, the pelletizer comprising a die plate having a plurality of apertures for extrudate strands, a cutter plate with a plurality of blades, in particular at least four blades, preferably at least 10 blades, in particular preferred at least 20 blades, and a drive shaft that is fixedly connected to the cutter plate, said die plate comprising a first side that is facing the cutter plate and an opposing second side facing away from the cutter plate, the remote alignment adjustment device having a distance measurement probe and a mounting device that is attachable to the drive shaft, wherein the remote alignment adjustment device is connectable to a data processing device, preferably a data processing device having a display. Preferably the remote alignment adjustment device comprises a camera for taking photos and/or videos and the distance measurement probe comprises a dial indicator gauge.

The method comprises the following steps:
i) attaching the remote alignment adjustment device to the drive shaft using the mounting device in such a way that the distance measurement probe contacts a first section of die plate, in particular using mechanical fastening means such a screws and clamps, preferably after insertion of the remote alignment adjustment device through the reclosable opening of the chamber of the pelletizer, obtaining measuring data of said first section,
ii) transmitting measuring data of the distance measurement probe, in particular a video feed and/or photos showing a dial indicator gauge of the distance measurement probe, relating to the first section of the die plate from the remote alignment adjustment device to the data processing device, in particular to the display of a data processing device, wherein the data processing device is preferably a laptop, a personal computer (PC) or a tablet that is arranged at a distance from the pelletizer,
iii) rotating the drive shaft to a second section of the die plate in such a way that the distance measurement probe contacts a second section of the die plate obtaining measuring data of said second section,
iv) transmitting measuring data of the distance measurement probe, in particular a video feed and/or photos showing a dial indicator gauge of the distance measurement probe, relating to the second section of the die plate from the remote alignment adjustment device to the data processing device, in particular to the display of a data processing device, wherein the data processing device is preferably a laptop, a personal computer (PC) or a tablet that is arranged at a distance from the pelletizer,
v) adjusting the alignment of the cutter plate and/or the die plate, in particular of the drive shaft and the cutter plate, based on measuring data of the first and second section supplied by the data processing device, in particular using numerical values calculated by the data processing device and shown on the display, preferably wherein the data processing device is a laptop or a personal computer (PC),
vi) removing the remote alignment adjustment device from the pelletizer, in particular through the reclosable opening of the chamber of the pelletizer.

The present disclosure relates to the adjustment of the cutter plate comprising said blades within the chamber by ensuring an optimal orientation of the cutter plate in relation to the die plate. An optimal angular orientation is preferably a parallel orientation of the cutter plate to the die plate. Also, the distance has to be adjusted in such a way that there is very little space between the cutter plate and the die plate. If the optimal orientation is achieved the resulting pellets will have a well-defined shape without tails. Preferably the adjusting the alignment of the cutter plate includes adjusting the distance between die plate and cutter plate as well as the angular orientation of the cutter plate.

The step i) of attaching the remote alignment adjustment device to the drive shaft using the mounting device in such a way that the distance measurement probe contacts the first section of die plate may include rotating the drive shaft from an attachment section to the first section of die plate of the die plate, i.e. it may be attached to the drive shaft and then rotated to the first section. Alternatively. it may be attached directly in such a way that the distance measurement probe contacts the first section without any need for rotating the drive shaft. In both cases the attachment is effected in such a way that in the end the first section is contacted by the distance measurement probe.

It should be understood that the use of "and/or" is defined inclusively, such that the term "a and/or b" should be read to include the sets: "a and b", "a or b", "a", "b". Preferably, "a and/or b" relates to two entities "a" and "b", wherein at least one of said entities is present in the embodiment described.

In some embodiments of the method in accordance with the present disclosure remote alignment adjustment device comprises a camera for taking photos and/or videos and the distance measurement probe comprises a dial indicator gauge, wherein the camera takes photos and/or a video of the dial indicator gauge, wherein said photos and/or video is said measuring data of the distance measurement probe. It was found that while it is possible to implement a wireless device within the distance measurement probe, the results are surprisingly more reliable when a conventional mechanical distance measurement probe is made use of and the dial indicator gauge of said distance measurement probe is observed using a camera. Electronic distance measurement probes may be less reliable than their mechanical counterparts. Also, this approach is cost effective as cameras are comparatively cheap. Preferably the dial indicator gauge displays the values measured using a contact sensor of the distance measurement probe.

In some embodiments, the dial indicator gauge is closer to the cutter plate than the camera in steps i), ii), iii), iv) and/or v), in particular all steps of the method, wherein the remote alignment adjustment device is attached to the drive shaft. Preferably, a mechanical dial indicator gauge, in particular a dial indicator gauge working without electricity, is used as such gauges are more heat resistant than electronic devices. However, in order to transmit a signal, in particular a wireless signal, relating to said dial indicator gauge it was found that it is preferred if a camera for taking photos and/or videos is constantly focused on the dial indicator gauge. To protect said camera for taking photos and/or videos, it was found to be preferable when it is removed from the hot cutter plate, in particular further away from the cutter plate than the distance measurement probe with the dial indicator gauge.

If no camera is made use of, it is preferred that the remote alignment adjustment device comprises a distance measurement probe, in particular an electronic distance measurement probe, that is connected to a wireless transmitter, preferably using a wire, wherein the wireless transmitter is transmitting the data in steps ii) and iv) wirelessly. However, if a camera is made use of it is preferable that said camera is connected, in particular by a wire, to a wireless transmitter or comprises a wireless transmitter, wherein the wireless transmitter is transmitting the data in steps ii) and iv).

In some embodiments, the mounting device comprises a clamp and/or screws for anchoring to the drive shaft. It was found that clamps and screws are most preferred for a connection to the drive shaft. Screws for anchoring to the drive shaft may be screws that solely interact with the clamp. However, it is also preferred in some embodiments if the mounting device comprises screws that directly are secured to respective apertures in the drive shaft. The above mentioned mechanical fastening means providing a secure hold and can be easily attached and detached.

The present disclosure also relates to embodiments wherein the method comprises the steps of
a1) rotating the drive shaft, in particular by 50° to 130°, preferably 70° to 110°, to a third section of the die plate in such a way that the distance measurement probe contacts a third section of the die plate obtaining measuring data of said third section,
a2) transmitting measuring data of the distance measurement probe, in particular a video feed and/or photos showing a dial indicator gauge of the distance measurement probe, relating to the third section of the die plate from the remote alignment adjustment device to the data processing device, in particular to the display of a data processing device, wherein the data processing device is preferably a laptop, a personal computer (PC) or a tablet that is arranged at a distance from the pelletizer,
b1) rotating the drive shaft, in particular by 50° to 130°, preferably 70° to 110°, to a fourth section of the die plate in such a way that the distance measurement probe contacts a fourth section of the die plate obtaining measuring data of said fourth section,
b2) transmitting measuring data of the distance measurement probe, in particular a video feed and/or photos showing a dial indicator gauge of the distance measurement probe, relating to the fourth section of the die plate from the remote alignment adjustment device to the data processing device, in particular to the display of a data processing device, wherein the data processing device is preferably a laptop, a personal computer (PC) or a tablet that is arranged at a distance from the pelletizer.

Preferably the alignment of the cutter plate is adjusted based on measuring data of 4 to 20 sections, including the first, second, third and fourth section. It was found that it is not needed to cover every section of the die plate with the above described adjustment method. Instead, a limited amount of sections is examined using the remote alignment adjustment device. Surprisingly as little as four sections can be enough to arrive at an ideal final alignment. In one preferred embodiment, the alignment of the cutter plate is adjusted based on measuring data of four to eight different sections of the die plate. Steps a1) to c) as shown above are preferably inserted between steps v) and vi).

In some embodiments. the alignment steps as discussed above are carried out more than once, the drive shaft is rotated a second time to previously examined first, second, third and/or fourth sections and measuring data of the distance measurement probe is transmitted of each section as described above a second time. This procedure may even be repeated a third or fourth time until the alignment of the cutter plate is correct, in particular parallel to the die plate.

Measuring data is data that can be used for correcting the alignment of the cutter plates. It may be data indicating a distance, wherein said distance is affected by the relative positions of die plate and cutter plate. Measuring data of the first section is data that is at least partially based on information about the first section that is obtained using the remote alignment adjustment device, in particular the distance measurement probe. Measuring data of the second section is data that is at least partially based on information about the second section that is obtained using the remote alignment adjustment device, in particular the distance measurement probe. Measuring data of the third section is data that is at least partially based on information about the third section that is obtained using the remote alignment adjustment device, in particular the distance measurement probe. Measuring data of the fourth section is data about the fourth section that is at least partially based on information that is obtained using the remote alignment adjustment device, in particular the distance measurement probe. In some embodiments measuring data relates to photos and/or videos of the dial indicator gauge as described above.

Preferably, adjusting the alignment of the cutter plate comprises the angular orientation and distance of the cutter plate, in particular in relation to the die plate

In some embodiments, the cutter plate is adjusted based on measuring data of four sections, the sections being the aforementioned first, second, third and fourth section, wherein each section has an angular distance of at least 40° from the closest adjacent section. Preferably the angular distance between adjacent sections is in the range of from 50° to 130°C, in particular from 70° to 110°C, in particular from 85° to 95°, in such a way that all angular distances add up to 360°. In one particularly preferred embodiment the first, second, third and fourth sections are spaced at equal angular distances apart from each other and no other sections are present, i.e. each having a distance of 90° to the closest adjacent section adding up to 360°. In some embodiments, the alignment of the cutter plate is adjusted based on measuring data of four positions,

wherein a position in direction of the center of the earth (downwards) indicates 0° and positions are read at 45°, 135°, 225° and 315°.

In some further embodiments, the die plate maintains at least in a section a temperature that differs no more than 50°C from its operating temperature, wherein the operating temperature is the temperature said section has when pelletizing for at least two hours. Preferably the temperature differs no more than 25°C, in particular 10°C, from said operating temperature. It was found that the alignment is more precise when the die plate is similarly hot as when it is operating. When cooling the die plate, the alignment is slightly distorted. Thus, the alignment when the die plate is hot avoids such a distortion. In combination with the above-mentioned system a high degree of security is maintained as the adjustment can be conducted without anybody being too close to the hot die plate.

Preferably a fluid, in particular a water steam at a pressure well above atmospheric pressure, is used for heating of the die plate. In some embodiments, the die plate at least in a section, preferably the whole die plate, has a temperature of 180 to 280°C, in particular 200 to 260°C, that is preferably maintained using said heating fluid. It was found that within this temperature range the distortion as discussed above is less severe even if the above-mentioned difference to the operating temperature cannot be maintained.

In some embodiments, a single, in particular rigid, connecting structure is used for the distance measurement probe, preferably also for the camera. This sometimes is the easiest and most preferred built. In other embodiments, the remote alignment adjustment device comprises a camera having a first mounting device having a first connecting structure that is connectable to the shaft and the distance measurement probe has a second mounting device having a second connecting structure that is separately connectable to the shaft, wherein said mounting devices are not connected. It is thus possible to first install the distance measurement probe and to later install the camera. However, it was found to be preferable if the remote alignment adjustment device comprises only a single mounting device for the camera and the distance measurement probe. In particular, it is preferred if said single mounting device has a first and a second connecting structure affixed to the same clamp, preferably a first connecting structure for the camera and a second connecting structure for the distance measurement probe, in particular the distance measurement probe and the dial indicator gauge.

In some embodiments the remote alignment adjustment device, in particular the camera of the remote alignment adjustment device, comprises a flexible and deformable first connecting structure that remains rigid when no stronger force than the force of gravitation is applied, in particular for the camera. This first connecting structure may be a wire construct. Preferably it is a gooseneck having a flexible, adjustable shaft such as e.g. used in gooseneck lamps. In accordance with the present disclosure also an inflexible mounting device as first connecting structure for the camera is possible. However, it was found that with a flexible neck the camera can be brought easier into a better position. In some embodiments, the camera is an endoscope.

Preferably the camera as described above is connected using said flexible and deformable first connecting structure wherein the distance measurement probe is connected using a rigid non-deformable second connecting structure, in particular a rigid metal framework. In this embodiment, the rigid non-deformable second connecting structure provides reliable data as said rigid second connecting structure is not dislocated accidentally. However, it was found that a slight dislocation of the camera is acceptable and thus a flexible and deformable first connecting structure as described above is preferable in order to allow for an easy correction of the orientation of the camera if the video feed or photos are not optimal. In some embodiments, the second connecting structure is also used for the camera in addition to or instead of a first connecting structure.

In some embodiments, the above mentioned camera is an endoscope. It should be understood that an endoscope is an illuminated optical, slender and tubular instrument. It was found that an endoscope is particularly well suited for observing the indicator gauge during adjustment in accordance with the method of the present disclosure. In some embodiments, a flexible endoscope is used, in particular having a flexible gooseneck, in particular as a first connecting structure.

In some embodiments, the mounting device comprises a clamp and/or screws for anchoring to the drive shaft. It was found that clamps and screws are most preferred for a connection to the drive shaft. Screws for anchoring to the drive shaft may be screws that interact with the clamp. However, it is also preferred in some embodiments if the mounting device comprises screws that directly are secured to respective apertures in the drive shaft. The above mentioned mechanical fastening means providing a secure hold and can be easily attached and detached.

In some embodiments, the remote alignment adjustment device comprises a light source. Preferably, the light source is an LED-lamp. It also may be provided by glass fibre bundles that transmit light.

In some embodiments, the polymer pellets are made from polyethylene, in particular high-density polyethylene (HDPE). It was found that the above described method is particularly preferred for said pellets.

In some embodiments, the remote alignment adjustment device is connected to the data processing device wirelessly, in particular comprises a wireless transmitter for transmitting the measuring data. It is possible to connect the alignment adjustment device to the data processing device using a cable. However, if no cable is used, there is less danger that vibrations of the cable are transmitted to the distance measurement probe resulting in a distorted signal. If the distance measurement probe is shaking this can result in a signal feed, in particular signal feed of a dial indicator gauge that may not be suited for a perfect adjustment of the cutter plate with respect to the position of the die plate. This error source can be avoided using a wireless signal such a W-LAN, Bluetooth, IR-Signals etc. Furthermore, if the drive shaft is rotated in accordance with the method, the cable will be rotated as well and may wrap round said drive shaft. It was surprisingly found that if a chamber of metal with an opening is provided the opening is sufficient to ensure a stable signal feed to the data processing device. Although wireless transmitting methods are known in the art, it was surprisingly found that such wireless transmission is even possible for underwater cutters. Underwater cutters usually have walls made of metal that inhibit any transmission. However, it was found that a reclosable opening in a side wall may be enough to provide for a stable wireless signal.

The data processing device preferably is connected to a display. In some embodiments, the sole purpose of the data processing device may be to convert a digital signal, in particular the measuring data, into a screen content of a display. In other embodiments, the data processing device may have other purposes, too.

Furthermore, the data processing device preferably is configured to analyze the data obtained by the remote alignment device, in particular by the camera, and to provide adjustment values based on said data for manual adjustment means for adjusting the cutter plate and/or the die plate, in particular the die plate using manual adjustment means. It was found that if a camera is used the data processing device can be modified not only to display a video feed, but to use the video feed to provide adjustment values, i.e. numerical values for adjustment, that contain information about the adjustment. Preferably, said values contain information about the settings of external screws of the pelletizer, e.g. how much that a regulating screw has to be turned based on indications on the gauge.

In some embodiments, the manual adjustment means are regulating screws and are arranged externally of the chamber for changing the adjustment of the cutter plate and/or the die plate. In some embodiments of the method the first, second, third and fourth sections correspond to a first regulating screw, a second regulating screw, a third regulating screw, and a fourth regulating screw that is arranged outside the chamber. In one embodiment, the first screw is arranged outside opposing the first section, the second screw is arranged outside opposing the second section, the third screw is arranged outside opposing the third section and, the fourth screw is arranged outside opposing the fourth section.

In some embodiments in accordance with the present disclosure the die plate is removed for an exchange of the cutter plate and reinserted prior to adjusting the blades. Before removal the chamber is emptied of water.

In some embodiments, the signal of the camera may contain a IR-signal containing information about light in the infrared region. It was found that the hot pelletizer plate can be easily detected and thus more precise information can be obtained. However, usually the video feed of the camera comprises a visual video feed using visible light.

In some embodiments, the pelletizer has a chamber facing the second side of the cutter plate, wherein the chamber has a reclosable opening, in particular a watertight reclosable opening e. g. in a side wall of the chamber, for insertion of the remote alignment adjustment device, wherein the chamber is configured and designed to be filled with water. Preferably the installation of the remote alignment adjusting device in step i) is conducted through this reclosable opening. In some embodiments, this reclosable opening is a small opening, in particular having a smaller diameter that the cutter plate, i.e. the cutter plate cannot be inserted through the reclosable opening.

The present disclosure also relates to a process for preparing polyethylene pellets in a pelletizer, the pelletizer comprising a die plate having a plurality of apertures for extrudate strands, a cutter plate with a plurality of blades and a drive shaft that is fixedly connected to the cutter plate, said die plate comprising a first side that is facing the cutter plate and an opposing second side facing away from the cutter plate, the remote alignment adjustment device comprising a distance measurement probe and a mounting device that is connectable to the pelletizer, wherein the remote alignment adjustment device is connectable to a data processing device, the process of pelletizing comprising the steps of
a) melting of polyethylene in an extruder,
b) pushing of the melted polyethylene through a die plate,
c) cutting the resulting strands with the cutter plate into pellets,
e) stopping the machine for maintenance,
f) removing water from the chamber,
g) aligning of the cutter plate as described above,
h) refilling the chamber with water,
i) continuing with pelletizing in accordance with steps a) to c).

In some embodiments of the above process, the changing of the cutter plate is conducted using blade protection covers for the blades. It was surprisingly found that protection covers that are magnetic are particularly well suited. Preferably, the protection covers are made of metal or comprise metal. Thus, the present disclosure also relates to such blade protection covers, wherein a blade protection cover surrounds each blade and is attached magnetically. This also increases security of the process. Preferably said blade protection covers are magnetic covers having a first side wall being connected flexibly to a second side wall, wherein the first side wall is magnetically connectable to a first side of the blade and the second side wall is magnetically connectable to the opposing second side of the blade and the flexible region is arranged above the cutting edge of the blade. It should be noted that the protection covers preferably are removed before the alignment method in accordance with the present disclosure is conducted.

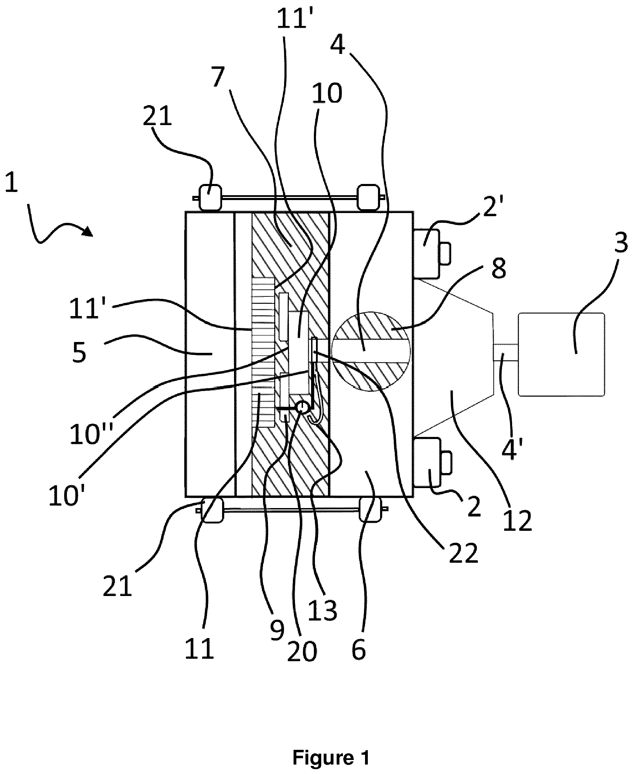

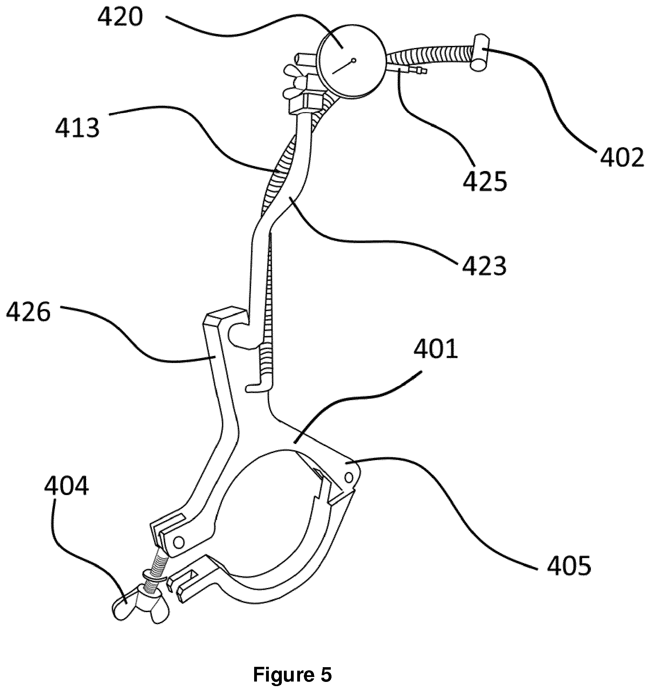

Figure 1 shows a schematic view of a preferred embodiment of the pelletizer (1). The pelletizer comprises a die plate (11) having a plurality of apertures (not shown) for extrudate strands, a cutter plate (10) with a plurality of blades (9) and a drive shaft (4) that is fixedly connected to the cutter plate (10). The die plate (11) comprises a first side (11') that is facing the cutter plate and an opposing second side (11") facing away from the cutter plate. The pelletizer further comprises a remote alignment adjustment device having a camera (13) and the distance measurement probe with dial indicator gauge (20) that are both connected to a mounting device (22) which is attachable to the drive shaft (4). An embodiment of the mounting device (22) is discussed in more detail in relation to Figure 5. The cutter plate (10) and the die plate (11) are arranged in a housing with a front part (5), a middle part (6) and a backside (12) having a chamber (7). The chamber (7) is accessible through an opening (8). The drive shaft (4) is connected with one end (4') to a motor (3) that is configured to rotate the shaft with a high speed, in particular with different speeds from a low speed to a high speed. The cutter plate (10) also has a first side (10') facing away from the die plate (11) and a second side (10") having the blades facing the first side (11') of the die plate (11). Manual adjustment means (2, 2') that are regulating screws are arranged externally of the chamber for changing the adjustment of the cutter plate and/or the die plate. Clamp locks (21) are arranged on both sides of the chamber for closing the chamber.

The remote alignment adjustment device (13) comprises the distance measurement probe with dial indicator gauge (20) and a flexible endoscope with a camera (13) having a gooseneck and being attached to the drive shaft using a clamp and screws of the mounting device (20). The camera (13) contains a wireless transmitter for sending measuring data to the data processing device. It should be noted that the inside of the chamber with the cutter plate and the die plate is shown through a large opening. This large opening is just depicted for the purpose of showing the inside. During the method in accordance with the present disclosure the cutter plate (10) can only be accessed through the opening (8). If manual adjustment was conducted of the alignment a person would look through said opening.

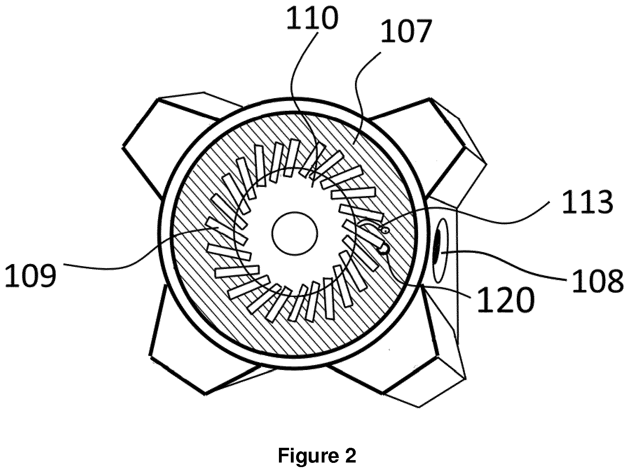

Figure 2 shows a schematic view of the inside of the pelletizer wherein the front part of the housing and the die plate is not visible. A cutter plate (110) having a plurality of blades (109) can be seen. When the orientation of the cutter plate is corrected the chamber (107) is closed apart from the opening (108) in a side of the chamber (107). Connected to the central drive shaft for the cutter plate is a remote alignment adjustment device (113). Figure 2 also shows the dial indicator gauge (120).

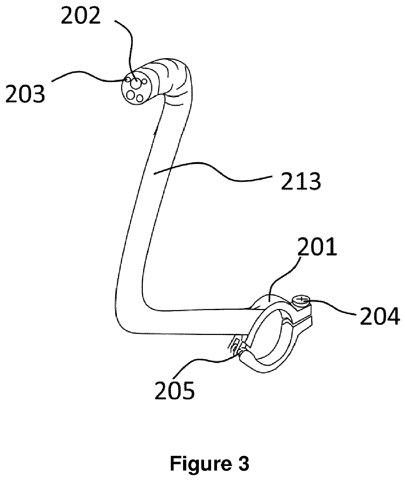

Figure 3 shows a schematic view of an embodiment of the camera (213). The camera (213) comprises a light source (203) that is a LED light. In the embodiment of figure 3 three LED light sources have been used resulting in a uniform illumination that allows for a more precise adjustment. Additionally, the camera (213) comprises a camera lens (202). The whole built is that of an endoscope. The gooseneck is flexible. The camera (213) is connectable to a shaft using a clamp (201) having a screw (204). The clamp (201) has a hinge (205) for opening said clamp (201). In an alternative embodiment, it is also possible to implement a clamp wherein a screw is directly secured within the shaft. In this case, the shaft needs to have at least one hole preferably with a thread for screws. The embodiment of Figure 3 may be combined with a separate distance measurement probe (not shown) having a mechanical dial indicator gauge (not shown) and a separate clamp (not shown) that are also part of the remote alignment device in some embodiments. As can be derived from figure 5, it can also be connected to the clamp that also carries the distance measurement probe. However, in this embodiment this is not the case and the distance measurement probe is connected to another clamp (not shown). The remote alignment device thus comprises in this embodiment two spaced apart devices each having its own clamp. This may be preferred to allow for a maximum flexibility in positioning the camera. However, it also is cumbersome to some degree to install two devices. Thus embodiments, wherein the remote alignment device is built in one piece are preferred. One such embodiment is shown in figure 5.

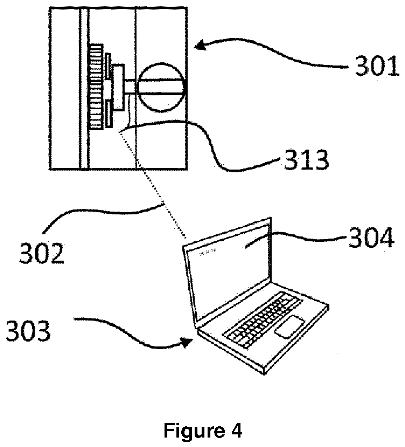

Figure 4 shows a schematic view of a pelletizer (301), wherein the wireless connection (302) between a laptop (303) having a display (304) and a remote alignment adjustment device (313) is shown. Surprisingly the opening provides for a stable wireless connection.

Figure 5 shows an embodiment of the remote alignment adjustment device (426) having a distance measurement probe (425) and a mounting device (401) that is attachable to the drive shaft, wherein the remote alignment adjustment device (426) comprises a camera (402) for photos and/or videos and the distance measurement probe (425) comprises a dial indicator gauge (420), wherein the camera (402) may take photos and/or a video of the dial indicator gauge (425), when adjusted correctly. The measuring data consists of or comprises any photos and/or video taken with the camera. The alignment adjustment device (426) is connectable to a drive shaft using a mounting device (401) having a clamp and a screw (404). The clamp has a hinge (405) for opening said clamp. The camera is connected by a deformable first connecting structure (413) and the distance measurement probe as well as the dial indicator gauge by a rigid second connecting structure (423).

The features of the invention disclosed in the above description, the claims and the drawings can be essential, both individually and in any combination, to implement the invention in its various embodiments. Other features, advantages and embodiments of the subject matter of the present disclosure disclosed herein will be readily apparent to those exercising ordinary skill after reading the foregoing disclosure. In this regard, while specific embodiments of the subject matter of the present disclosure have been described in considerable detail, variations and modifications of these embodiments can be effected without departing from the spirit and scope of the disclosure as described and claimed.

## Claims

1. A method for aligning a cutter plate in a pelletizer for polymer pellets using a remote alignment adjustment device,
the pelletizer comprising a die plate having a plurality of apertures for extrudate strands, a cutter plate with a plurality of blades and a drive shaft that is fixedly connected to the cutter plate,
said die plate comprising a first side that is facing the cutter plate and an opposing second side facing away from the cutter plate,
the remote alignment adjustment device having a distance measurement probe and a mounting device that is attachable to the drive shaft, wherein the remote alignment adjustment device is connectable to a data processing device,
the method comprising the following steps:
i) attaching the remote alignment adjustment device to the drive shaft using the mounting device in such a way that the distance measurement probe contacts a first section of the die plate obtaining measuring data of said first section,
ii) transmitting said measuring data of the first section of the die plate from the remote alignment adjustment device to the data processing device,
iii) rotating the drive shaft to a second section of the die plate in such a way that the distance measurement probe contacts a second section of the die plate obtaining measuring data of said second section,
iv) transmitting said measuring data of the second section of the die plate from the remote alignment adjustment device to the data processing device,
v) adjusting the alignment of the cutter plate and/or the die plate based on measuring data of the first and second section supplied by the data processing device,
vi) removing the remote alignment adjustment device from the pelletizer.

2. The method according to claim 1, wherein
the remote alignment adjustment device comprises a camera for taking photos and/or videos and the distance measurement probe comprises a dial indicator gauge, wherein the camera takes photos and/or a video of the dial indicator gauge, wherein said photos and/or video is said measuring data of the distance measurement probe.

3. The method according to claim 2, wherein
the dial indicator gauge is closer to the cutter plate than the camera in steps i) to v).

4. The method according to any of the preceding claims, further comprising the steps of
a1) rotating the drive shaft to a third section of the die plate in such a way that the distance measurement probe contacts a third section of the die plate obtaining measuring data of said third section,
a2) transmitting said measuring data of the third section of the die plate from the remote alignment adjustment device to the data processing device,
b1) rotating the drive shaft to a fourth section of the die plate in such a way that the distance measurement probe contacts a fourth section of the die plate obtaining measuring data of said fourth section,
b2) transmitting said measuring data of the fourth section of the die plate from the remote alignment adjustment device to the data processing device.

5. The method according to any of the preceding claims, wherein
the die plate maintains at least in a section a temperature that differs no more than 50°C from its operating temperature, wherein the operating temperature is the temperature said section has when pelletizing for at least two hours.

6. The method according to any of the preceding claims, wherein
the die plate has at least in a section a temperature of 180 to 280°C that is maintained using a heating fluid.

7. The method according to any of the preceding claims, wherein
the mounting device comprises a flexible and deformable connecting structure that remains rigid when no stronger force than the force of gravitation is applied.

8. The method according to any of the preceding claims, wherein
the mounting device comprises a clamp and/or screws for anchoring to the drive shaft.

9. The method according to any of the preceding claims, wherein
the remote alignment adjustment device comprises a light source.

10. The method according to any of the preceding claims, wherein
the polymer pellets are made from polyethylene.

11. The method according to any of the preceding claims, wherein
the remote alignment adjustment device is connected wirelessly to the data processing device.

12. The method according to any of the preceding claims, wherein
the data processing device is configured to analyze the measuring data of the distance measurement probe and to provide adjustment values based on said measuring data for manual adjustment means for adjusting the cutter plate and/or the die plate.

13. The method according to claim 12, wherein
the manual adjustment means are regulating screws and are arranged externally of the chamber for changing the adjustment of the cutter plate and/or the die plate.

14. The method according to any of the preceding claims, wherein
the pelletizer has a chamber facing the second side of the cutter plate, wherein the chamber has a reclosable opening for insertion of the remote alignment adjustment device, and wherein the chamber is configured and designed to be filled with water.

15. A process for preparing polyethylene pellets in a pelletizer,
the pelletizer comprising a die plate having a plurality of apertures for extrudate strands, a cutter plate with a plurality of blades and a drive shaft that is fixedly connected to the cutter plate,
said die plate comprising a first side that is facing the cutter plate and an opposing second side facing away from the cutter plate,
the remote alignment adjustment device comprising a distance measurement probe and a mounting device that is connectable to the pelletizer,
wherein the remote alignment adjustment device is connectable to a data processing device,
the process of pelletizing comprising the steps of
a) melting of polyethylene in an extruder,
b) pushing of the melted polyethylene through a die plate,
c) cutting the resulting strands with the cutter plate into pellets,
e) stopping the machine for maintenance,
f) removing water from the chamber,
g) aligning of the cutter plate in accordance with claims 1 to 14,
h) refilling the chamber with water,
i) continuing with pelletizing in accordance with steps a) to c).
